# EUROPÄISCHE PATENTSCHRIFT

(11) **EP 1 303 762 B1**
(45) Veröffentlichungstag und Bekanntmachung des Hinweises auf die Patenterteilung: **13.09.2006**
(21) Anmeldenummer: 01955319.7
(22) Anmeldetag: 21.06.2001
(51) Int. Cl.: G01P 3/481, G08C 15/00, F16D 66/02

(54) **ÜBERMITTLUNG VON MEHREREN SENSORSIGNALEN (KRAFTFAHRZEUG) IM STROMMULTIPLEX**
CURRENT MULTIPLEX TRANSMISSION OF SEVERAL SENSOR SIGNALS (VEHICLES)
TRANSMISSION DE PLUSIEURS SIGNAUX DE CAPTEURS (VEHICULES) PAR MULTIPLEXAGE DU COURANT

(30) Priorität: 06.07.2000 DE 10032408; 15.12.2000 DE 10062839
(43) Veröffentlichungstag der Anmeldung: 23.04.2003
(73) Patentinhaber: Continental Teves AG & Co. oHG, 60488 Frankfurt (DE)
(72) Erfinder: BÜGE, Klaus-Peter, 69509 Mörlenbach (DE); BRÜGGEMANN, Stephan, 60431 Frankfurt/Main (DE); ZACHOW, Jochen, 74850 Schefflenz (DE); ECKRICH, Jörg, 65201 Wiesbaden (DE)
(86) Internationale Anmeldenummer: PCT/EP2001/006988
(87) Internationale Veröffentlichungsnummer: WO 2002/003079

(56) Entgegenhaltungen:
- EP-B- 0 168 303
- DE-A- 19 618 867
- DE-A- 19 621 902
- DE-A- 19 650 935

## Beschreibung

Die Erfindung betrifft Anordnungen gemäß den Oberbegriffen der Ansprüche 1 und 14, einen Sensor gemäß Oberbegriff von Anspruch 8, sowie ein Verfahren gemäß Oberbegriff von Anspruch 12.

Für die Drehzahlérkennung in geregelten Kraftfahrzeugbremssystemen (ABS, ASR, ESP et.) werden zunehmend aktive Sensoren eingesetzt, die das Signal eines rotierenden magnetischen Encoders oder eines Geberrades mit einem Sensorelement aufnehmen. Die durch den Encoder hervorgerufenen magnetische Oszillation des Magnetfelds werden in einem magnetoresistiven Sensorelement erfaßt, verstärkt und durch eine elektrornische Einrichtung in zwei Strompegel umgesetzt. Die Frequenz des auf diese Weise erzeugten Signals ist proportional zur Drehzahl des Encoders. Ein entsprechender aktiver Sensor mit einem magnetoresistiven Inkrementalgeber ist beispielsweise in der WO 98/09173 beschrieben. Der Sensor besitzt zwei Signalleitungen, die mit einem Bremsensteuergerät verbunden werden können. Eine derartige Schnittstelle, bei der die Informationsübertragung durch Modulation des Stroms erfolgt, weist Vorteile bezüglich der Betriebssicherheit auf. Eine Ausführungsform dieser bekannten aktiven Sensoren ist mit einem zusätzlichen Datenkanal für Zusatzinformation ausgestattet. Es können dann Zusatzinformationen, wie vorliegender Bremsbelagverschleiß, Vorwärts/Rückwärts-Erkennung etc. übertragen werden. Das Zusatzsignal des bekannten Sensors ist codiert und wird in den Pulspausen durch ein Stromsignal beispielsweise mit geringerer Amplitude als die Strompulse für das Drehzahlsignal übertragen.

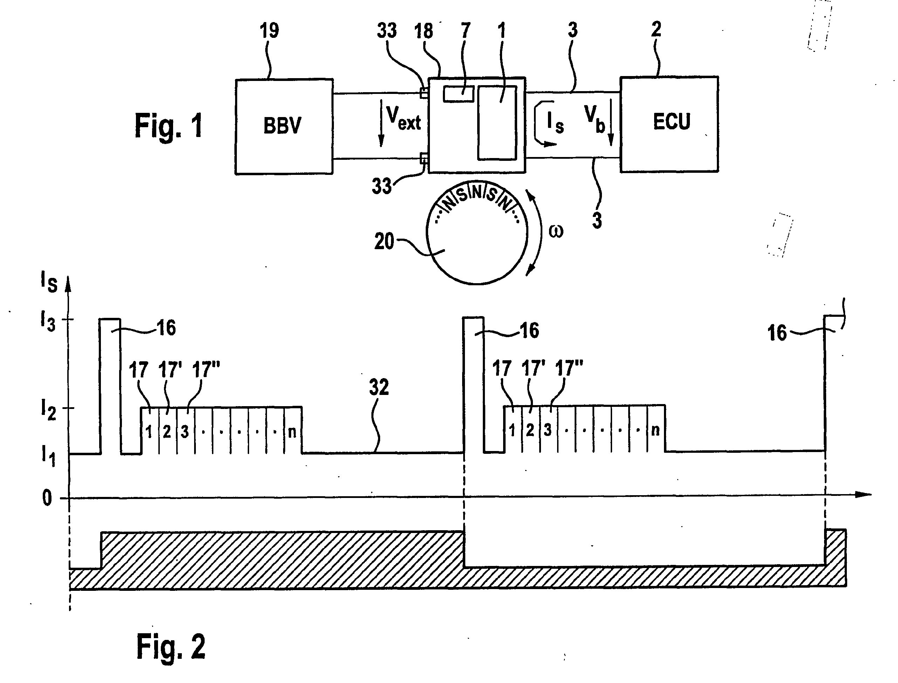

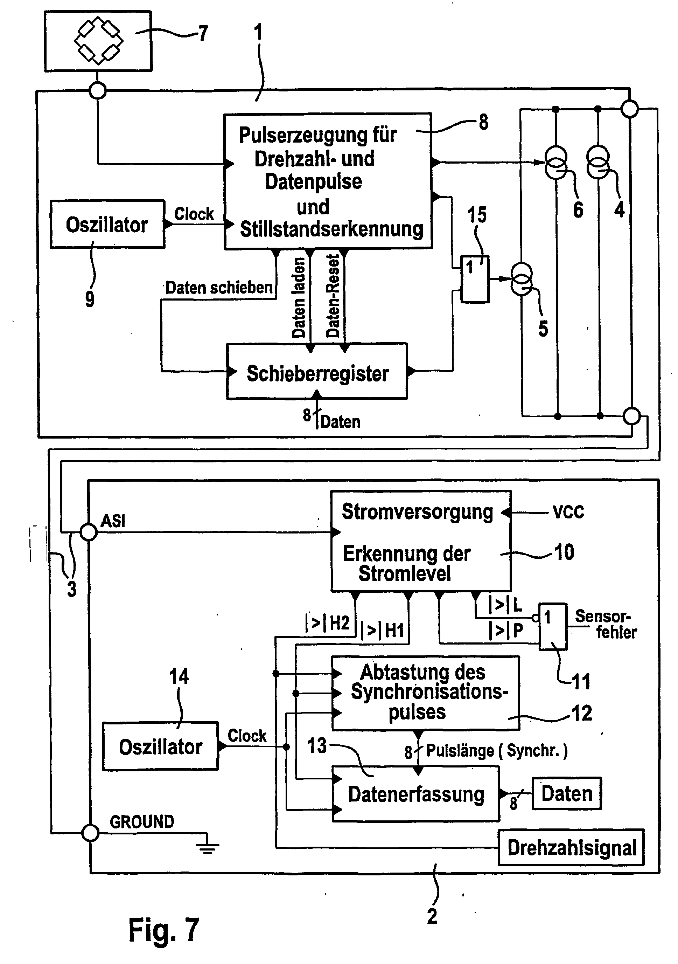

Aus der DE 196 50 935 geht eine Schaltungsanordnung für einen aktiven Drehzahlsensor hervor, der weitestgehend nach dem weiter oben beschriebenen Prinzip arbeitet. So können ebenfalls Zusatzinformationen, wie z.B. Bremsbelagverschleiß, über eine strommodulierte Zweileiterschnittstelle übertragen werden. Die Übertragung der Zusatzsignale erfolgt durch eine Folge von dicht aufeinanderfolgenden Pulsen, die im Zusammenhang mit einer übertragenen Folge von wahlweise "0" oder "1" Zuständen stehen. Eine Beispiel für einen Signalverlauf des Sensors nach dem Stand der Technik ist in Fig. 2 dargestellt. Die.Strompulse 16 werden bei jedem Wechsel der magnetischen Richtung des Encoders erzeugt. Die Abstände der Pulse sind daher ein Maß für die Winkelgeschwindigkeit ù des Encoders. Der Grundstrom I1 dient zur ständigen Stromversorgung der elektronischen Bauelemente des aktiven Sensors. Die Pulse für die Zusatzsignale 17,17',17" sind haben eine geringere Amplitude (Strompegel 12) als die Drehzahlimpulse und werden durch diesen getriggert.
Eine Schaltungsanordnung 1 zur Aufbereitung der Sensorsignale ist im oberen Teil von Fig. 7 dargestellt. Die Erzeugung des Stromprotokolls wird dort an Hand der Stromquellen 5,6,4 deutlich. Das Signal eines magnetoresistiven Drehzahlsensors 7 wird an eine Verarbeitungselektronik 8 zur Pulserzeugung geleitet, die auf die Stromquelle 6 wirkt. Stromquelle 6 erzeugt die Drehzahlimpulse. Stromquelle 4 stellt den Versorgungsstrom zur Verfügung. Stromquelle 5 dient zur Erzeugung der Zusatzsignale in den Pausen der Drehzahlpulse und wird über ein ODER-Gatter 15 von der Verarbeitungselektronik 8 oder ein Schieberegister angesteuert. Der Oszillator 8 erzeugt ein Taktsignal für die Zusatzsignale.
Die Übertragung des Sensorsignals an ein Bremsensteuergerät erfolgt über die Signalleitungen 3. Ein Beispiel für eine im Bremsensteuergerät enthaltene Schaltungsanordnung 2 zur Auswertung des Stromsignals zeigt der untere Teil von Fig. 7.

Mittels der Zusatzdaten können Zusatzinformationen über die Signalleitungen mitübertragen werden. Bei bekannten Ausführungen von aktiven Sensoren können externe Signale lediglich in Form von zwei Zuständen, 0 oder 1, verarbeitet werden. Es besteht jedoch zunehmend der Bedarf, die Genauigkeit zum Beispiel bei der Bremsverschleißerkennung von einer reinen digitalen Erkennung auf eine kontinuierliche Messung des Grads des Verschleißes auszudehnen. Zusätzlich besteht der Bedarf an einer besonders betriebssicheren Messung dieser zusätzlichen Informationen. Eine Erfassung des Bremsbelagverschleisses mit höherer Genauigkeit ist jedoch mit bekannten aktiven Sensoren nicht möglich, da der vorhandene Funktionsumfang ausgeschöpft wäre.
Nachteil bekannter aktiver Anordnungen für Sensoren ist auch, daß für eine Erfassung mit hoher Betriebssicherheit an einem zusätzlichen Signaleingang der Anordnung kein Meßstrom mit einer definierten Größe permanent vorhanden ist.

Diese Aufgabe wird gelöst durch eine Anordnung gemäß Anspruch 1.

Gemäß der Erfindung ist es möglich, einen Versorgungsstrom für einen externen zusätzlichen Sensor unter Einhaltung der Spezifikation für die Sensorsignalschnittstelle bereitzustellen. Dieser kann entweder immer umgeleitet werden oder nur zu bestimmten Zeitpunkten. Vorzugsweise erfolgt die Umleitung des Signalstroms dauerhaft, wobei es aus Gründen der verbesserten Meßgenauigkeit von Vorteil ist, nur während der Dauer eines Drehzahlimpulses die durch den zusätzlichen Sensor erfaßte Meßgröße auszuwerten.

Die Stromquelle zur Erzeugung des signalstroms kann im einfachsten Fall beispielsweise durch einen Stromspiegel realisiert sein. Es kann auch vorgesehen sein, daß für jede Signalart eine eigens für diese Signalart vorgesehene Stromquelle eingesetzt wird.
Bevorzugt ist die erfindungsgemäße Anordnung mit einer steuerbaren Stromquelle ausgestattet.

Eine Stromversorgung der erfindungsgemäßen Anordnung kann über einen zusätzlichen Spannungsversorgungsanschluß oder über die Signalleitungen erfolgen. Bevorzugt handelt es sich um eine Anordnung, die keinen weiteren Spannungsversorgungsanschluß besitzt, so daß diese von der Auswerteeinheit elektrisch über die den Signalstrom führenden Signalleitungen versorgt wird.
Bei einem sogenannten Zweileitersensor wird der Strom mittels zwei Leitungen an die Auswerteeinheit geführt. Es ist aber auch möglich, die zweite Leitung durch eine zuverlässige Masseverbindung (z.B. Karosserie) einzusparen.

Als weitere Sensoren lassen sich zusätzlich zu einem Drehzahlsensor zum Beispiel Sensoren zur Erfassung des Bremsbelagverschleisses, des Reifendrucks, der Bremsenerwärmung oder auch Statussignale der Anordnung selbst, wie Temperatur etc. einsetzen. Bevorzugt handelt es sich bei dem weiteren Sensor um einen nicht unmittelbar im Bereich der Anordnung untergebrachten Sensor, welcher über Zuleitungen mit geeigneter Länge mit der erfindungsgemäßen Anordnung verbunden sind. Bei einem Defekt des weiteren Sensors oder der hierfür vorgesehenen Zuleitungen muß dies seitens der Anordnung erkennbar sein.
Erfindungsgemäß bevorzugt ist der weitere Sensor ein passiver Sensor ohne einen eigenen elektrischen Versorgungsanschluß. Für den Betrieb des zusätzlichen Sensors wird der Strom der Signalleitungen zur erfindungsgemäßen Anordnung verwendet. Auf diese Weise sind die oben aufgeführten Betriebsfehler sicher erkennbar.

Vorzugsweise umfaßt die erfindungsgemäße Anordnung in der Verarbeitungseinheit und der Stromquelle Mittel, die insbesondere durch eine weitere Stromquelle oder eine steuerbare Stromquelle realisiert sind, zur Übertragung von einem oder mehreren codierten, insbesondere digital codierten, Zusatzsignalen. Wie bereits erwähnt, können die Zusatzsignale z.B. binär codierte Signale von zusätzlichen Sensoren und/oder für Statussignale der Sensoren oder der Anordnung sein. Mit Hilfe der Zusatzsignale läßt sich nach Maßgabe von der Verarbeitungseinheit zuführbaren Zusatzinformationen (z.B. Bremsbelagverschleiß, Statussignale, Drehrichtung, Spannungspegel) der Signalstrom modulieren.
Vorzugsweise wird eine Modulation des Signalstroms für die Zusatzsignale ausschließlich in den Signalpausen des Sensorsignals durchgeführt.

Die Statussignale werden zweckmäßigerweise durch einen Drehzahlpuls getriggert. Falls bei nicht vorhandener Drehzahl längere Zeit kein Drehzahlimpuls erzeugt wurde, kann vorgesehen sein, einen Hilfstriggerpuls zu erzeugen.

Wie weiter oben beschrieben, kann die Versorgung des weiteren Sensors über eine Signalleitung erfolgen. Vorzugsweise wird hierzu der Versorgungsstrom für den weiteren Sensor mittels eines Stromverzweigungsmittels, welches in der Anordnung vorgesehen ist, bereitgestellt.
Das Stromverzweigungsmittel läßt sich zweckmäßig im Strompfad der Stromquelle anordnen.
Für den weiter oben beschriebenen Fall, daß für jede Signalart getrennte Stromquellen vorgesehen sind, ist es möglich, das Stromverzweigungsmittel nur im Strompfad einer Stromquelle anzuordnen.

Das Verzweigungsmittel weist vorzugsweise in einem ersten Stromzweig eine Strommeßeinrichtung, wobei es sich beispielsweise um einen Widerstand in Kombination mit einer Spannungsmeßeinrichtung handeln kann, und in einem zweiten Stromzweig einen Anschluß für den weiteren Sensor auf.
Es ist aber auch möglich, an Stelle eines Widerstandselements im ersten Stromzweig ein anderes, zur Messung des Stroms geeignetes elektrisches Bauelement, wie beispielsweise einen Sense-FET einzusetzen.

Die durch den weiteren Sensor abgefühlte Meßgröße, wie Bremsbelagverschleiß moduliert vorzugsweise den durch den weiteren Sensor fließenden Strom. Dieser Strom wird zweckmäßigerweise mittels einer auf der Anordnung vorgesehenen Auswerteschaltung digital umgeformt und in Form eines codierten Zusatzsignals über den Signalstrom an eine Auswerteeinheit übertragen.

Der am weiteren Signaleingang angeschlossene weitere Sensor ist bevorzugt zur Erfassung der Position eines mechanisch verschiebbaren Elements, beispielsweise eines Bremssattels in einer Bremsbelagverschleißerkennung, vorgesehen. Der weitere Sensor umfaßt vorzugsweise ein induktives Bauelement, dessen Induktivität sich nach Maßgabe der Position des verschiebbaren Elements ändert.

Die Erfindung betrifft weiterhin einen Sensor zur Erfassung der Position eines mechanisch verschiebbaren Elements, insbesondere zur Erfassung des Bremsbelagverschleisses in einer Kraftfahrzeugbremse, mit einer Auswerteschaltung, welche dadurch gekennzeichnet ist, daß der Sensor zwei oder mehrere Signalleitungen zur Übermittlung eines von der Position proportional abhängigen Signals an eine Schaltungsanordnung aufweist und die Radsensoreinheit über die Signalleitungen mit einem Versorgungsstrom gespeist wird.

In einer bevorzugten Ausführungsform der Erfindung umfaßt der Sensor ein induktives Bauelement, dessen Induktivität sich nach Maßgabe der Position des verschiebbaren Elements, insbesondere nach Maßgabe des Verschleißes von Reibelementen in einer Radbremse, ändert.

Das verschiebbare Element ist zweckmäßigerweise mechanisch mit dem Magnetkern und/oder der Spule in der Weise verbunden, daß sich eine Lageänderung des Kerns gegenüber der Spule ergibt.

In einer weiteren bevorzugten Ausführungsform eines erfindungsgemäßen Sensor umfaßt dieser ein Widerstandselement, welches einen in Abhängigkeit vom verschiebbaren Element veränderbaren Widerstand hat, oder ein Schaltelement, welches sich bei einer bestimmten vorgegebenen Position des verschiebbaren Elements öffnet oder schließt, oder ein kapazitives Bauelement mit einer von der Position abhängigen Kapazität.
Es ist ebenfalls möglich, daß der erfindungsgemäße Sensor eine Kombination von wegabhängig veränderbaren Widerständen, Kapazitäten, Induktivitäten und Schaltern umfaßt.

Die Erfindung betrifft weiterhin ein Verfahren zur Übermittlung von Sensorsignalen an eine Auswerteeinheit mittels eines Signalstroms über eine elektrische Zuleitung von der Auswerteeinheit zu einer zur Übermittlung der Sensorsignale vorgesehenen Anordnung. Gemäß dem Verfahren wird das Signal eines Drehzahlsensors mittels einer Auswerteschaltung und einer Stromquelle in eine Folge von Strompulsen mit annähernd gleicher Amplitude und drehzahlabhängigem Pulsabstand umgesetzt.
Vorzugsweise ist dabei die Pulsbreite regelmäßig geringer, als die Pulsbreite des Drehzahlsignals vom Sensorelement. Gemäß dem Verfahren wird die Anordnung durch einen Grundstrom auf der Stromleitung von der Auswerteeinheit elektrisch versorgt.
In den Pulspausen werden gemäß einer bevorzugten Variante des Verfahrens zusätzlich mittels weiterer Pulse, die von den Drehzahlpulsen verschieden sind, in codierter Form Zusatzsignale über die Stromleitung mitübertragen.

Nach dem Verfahren der Erfindung wird der Signalstrom der Anordnung, insbesondere der Signalstrom für die Drehzahlpulse, in einen Meßstrom I4 und in einen Strom zur elektrischen Versorgung eines oder mehrerer zusätzlicher Sensoren aufgeteilt.

Eine elektrische Versorgung des zusätzlichen Sensors kann entweder dauerhaft erfolgen oder ausschließlich während bestimmte Sorten von Pulsen durch die Anordnung erzeugt werden. Bevorzugt erfolgt eine elektrische Versorgung des oder der zusätzlichen Sensoren nur während eines Strompulses.

Nachfolgend wird eine weitere Ausführungsform einer erfindungsgemäßen Anordnung zur Erfassung und Übermittlung von Sensorsignalen, worin ein Drehzahlsensorsignal eines Kraftfahrzeugrades in ein durch zwei Signalleitungen übertragbares Signal umgeformt wird und die Versorgungsspannung der Anordnung über die Signalleitungen erhalten wird beschrieben. Bei der Anordnung kann es sich bevorzugt um eine Erweiterung der weiter oben beschriebenen Anordnung handeln.

In der weiteren Anordnung wird gemäß der Erfindung mittels einer auf der Anordnung angeordneten Spannungsmeßeinrichtung die an den Signalleitungen anliegende Versorgungsspannung gemessen.
Hierdurch kann vorteilhafterweise überprüft werden, ob hohe Übergangswiderstände in den Signalleitungen zur Anordnung vorhanden sind, beispielsweise durch Leitungsbeschädigung oder mangelhafte Kontakte. Es kann auch überprüft werden, ob die Spannungsversorgung der Auswerteeinheit zuverlässig arbeitet.

Vorzugsweise ist in der Anordnung ein Analog/Digital-Wandler vorgesehen, der den Wert der Versorgungsspannung in ein Zusatzsignal umwandelt. Es kann auch ein Schaltelement vorgesehen sein, welches ein "high"-Statussignal oder ein "low"-Statussignal für eine in einem festgelegten Spannungsbereich liegende Versorgungsspannung als Zusatzsignal erzeugt. Ferner können Mittel vorgesehen sein, mit denen das Zusatzsignal in den Pulspausen des Drehzahlsignals über die Signalleitungen übertragen werden kann.
Besonders zweckmäßig werden in der Anordnung obere und untere Grenzwerte für Spannungen in einem Speicher festgelegt, wobei in der Anordnung überprüft wird, ob die Versorgungsspannung im durch diese Werte vorgegebenen zulässigen Bereich liegt. Diese Information kann dann über ein einziges Bit als Statussignal übertragen werden.

Weitere bevorzugte Ausführungsformen gehen aus der nachfolgenden Figurenbeschreibung hervor, in der die Erfindung an Hand von Ausführungsbeispielen näher beschrieben wird.

Es zeigen
- Fig. 1: einen an ein Steuergerät angeschlossenen aktiven Drehzahlsensor gemäß der Erfindung mit Bremsbelagverschleißerkennung,
- Fig. 2: den Signalverlauf des aktiven Drehzahlsensors gemäß der Erfindung,
- Fig. 3: eine erfindungsgemäße Anordnung zur Erfassung und Übermittlung eines Sensorsignals mit einem Drehzahlsensorelement 7 und einem weiteren Sensor 19,
- Fig. 4: den Stromverlauf in der Signalleitung der Anordnung im oberen Teilbild und im unteren Teilbild den korrespondierten Verlauf der Spannung an Widerstand 26 (Shunt),
- Fig. 5: eine Kraftfahrzeugbremse mit erfindungsgemäßem Bremsbelagverschleißsensor,
- Fig. 6: eine Anordnung zur Erfassung und Übermittlung eines Sensorsignals mit zusätzlicher Überwachung der Betriebsspannung und
- Fig. 7: ein System zur Übertragung von Raddrehzahlsignalen mittels eines aktiven Zweileitersensors an ein Bremsensteuergerät nach dem Stand der Technik.

Fig. 1 zeigt einen aktiven Raddrehzahlsensor 18 mit einem Drehzahlsensorelement 7 und einer Schaltungsanordnung zur Auswertung und Übermittlung der vom Encoder 20 aufgenommen Raddrehzahlinformationen. Der aktive Drehzahlsensor weist zusätzliche Signaleingänge 33 für einen Bremsbelagverschleißsensor 19 auf.

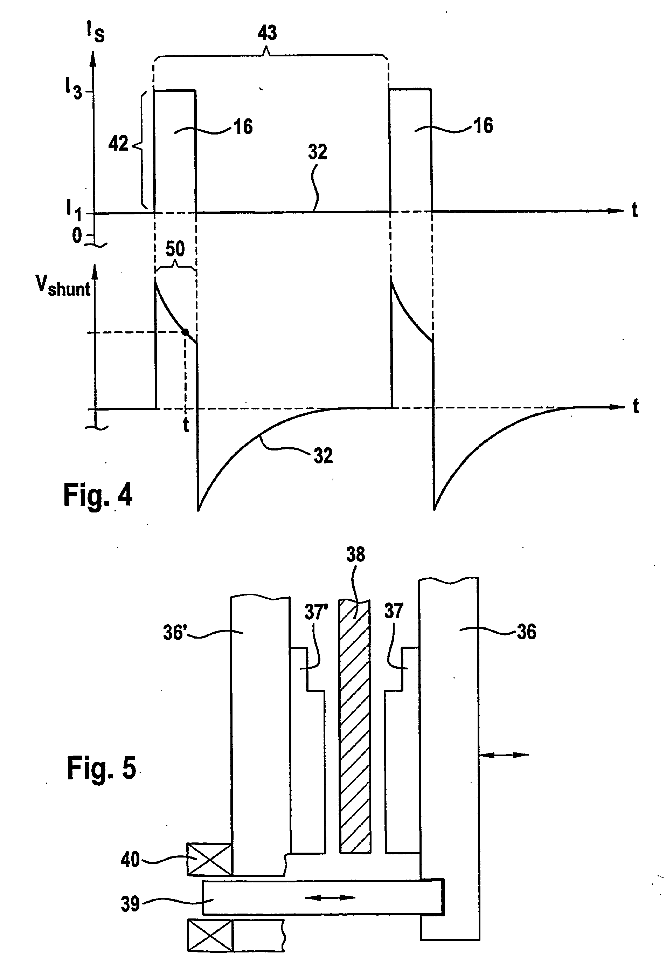

In Fig. 2 ist ein beispielhafter Verlauf für ein über Leitung 3 an ein Bremsensteuergerät 2 geleitetes Stromsignal dargestellt. Unterhalb des Diagramms ist schematisch die Position des Encoders unterhalb des Drehzahlsensorelements dargestellt. Wechselt der Encoder seine Magnetisierungsrichtung, so wird ein kurzer Strompuls der Höhe I3 erzeugt. Der Abstand 43 (Fig. 4) der Pulse enthält die Information über die Winkelgeschwindigkeit des Encoderrades. In den Pulspausen werden durch den Drehzahlpuls getriggerte Zusatzdaten in Form von jeweils einzelnen Bits 1,2,3,...n zugeordneten Pulsen der Höhe 12 übertragen. Im dargestellten Beispiel sind alle Bits auf den Wert "1" gesetzt, der Wert "0" würde einem Stromwert von I1 entsprechen. Die Daten können in der Weise codiert sein, daß ein bestimmter Stromlevel zu einem be- ' stimmten Zeitpunkt der Information 0 oder 1 entspricht, es ist aber auch möglich, das Signal mittels auf- oder absteigender Flanke zu codieren (manchester coded data). Eine aufsteigende oder absteigende Flanke wird gemäß einer bevorzugten Ausführung genau dann erkannt, wenn dieses Ereignis in einem in Abhängigkeit vom Radimpuls getriggerten Zeitfenster erfolgt.
Zur Energieversorgung des aktiven Sensors wird der von Null verschiedene Grundstrom I1 (Bezugszeichen 32) herangezogen.

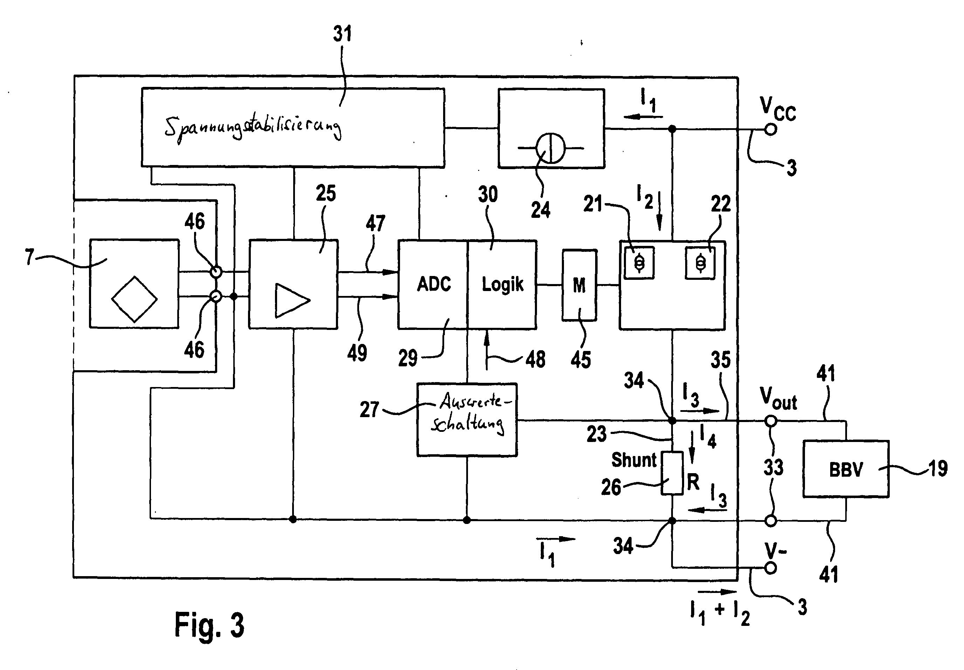

Fig. 3 zeigt eine erfindungsgemäße Anordnung zur Auswertung von Sensorsignalen und Übermittlung an ein Steuergerät.

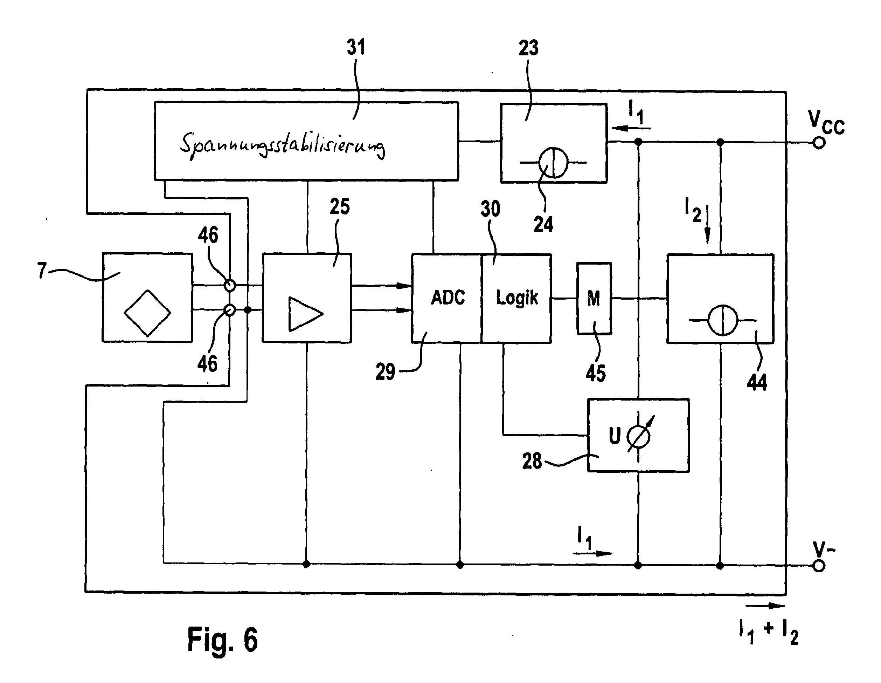

Die Erzeugung des Stromprotokolls erfolgt ähnlich wie bei der in Fig. 7 dargestellten bekannten Anordnung mittels Stromquellen 21,22,24. Die Stromquellen 21 und 22 erzeugen die Signalpulse, Stromquelle 24 sorgt für einen Grundstrom I1, der einer Spannungsstabilisierungsschaltung 31 zur Erzeugung der Versorgungsspannung der Anordnung zugeführt wird. Das Signal eines magnetoresistiven Drehzahlsensors 7 wird von dem Verstärker 25 verstärkt und einer Einheit 29,30 mit einem Analog-/Digital-Wandler 29 und einer Logikschaltung 30 zugeführt. Neben dem Drehzahlsignal 49 können auch Zusatzinformationen des Sensorelements 7 verarbeitet werden. Von der Logik 30 wird nach Maßgabe der Drehzahlsignale und der Zusatzinformationen ein Modulator 45 angesteuert, der auf eine regelbare Stromquelle 44 (Fig. 6) wirkt, oder für jeden Strompegel I2 und I3 jeweils eine separate Stromquelle 21 oder 22 ansteuert. Über die Signalleitungen 3 werden die Stromsignale auf an sich bekannte Weise weitergeleitet. Stromquelle 6 erzeugt die Drehzahlimpulse. Stromquelle 4 stellt den Versorgungsstrom zur Verfügung. Stromquelle 5 dient zur Erzeugung der Zusatzsignale in den Pausen der Drehzahlpulse und wird über ein ODER-Gatter 15 von der Verarbeitungselektronik 8 oder ein Schieberegister angesteuert. Der Oszillator 8 erzeugt ein Taktsignal für die Zusatzsignale.
Die Übertragung des Sensorsignals an ein Bremsensteuergerät erfolgt über die Signalleitungen 3.
Die Schaltungsanordnung in Fig. 3 weist zum Anschluß eines Bremsbelagverschleißsensors 19 zusätzliche Anschlüsse 33 auf, über die der Bremsbelagverschleißsensor mit Strom versorgt wird. Der zusätzliche Strom I3 wird vom Signalstrom I2 durch eine Stromverzweigung 34 erhalten. Um eine Signalerzeugung durch die Stromquellen 21,22 sicherzustellen, welche unabhängig von der Last des Sensors 19 ist, wird parallel zum Bremsbelagverschleißsensor ein Widerstandselement (Shunt) 26 angeordnet. Hierdurch kann jederzeit der gemäß dem Stromprotokoll vorgeschriebene Signalstrom eingehalten werden.
Zur Messung des zum Strom im Zweig 23 proportionalen Spannungsabfalls am Widerstand 26 ist eine Auswerteschaltung 27 parallel zum Widerstand geschaltet, die ausgangsseitig mit der Einheit 29,30 verbunden ist. Die Spannung des Widerstands kann auf diese Weise durch die Logik 30 zu geeigneten Zeitpunkten bestimmt werden.

Ist zum Beispiel ein Bremsbelagverschleißsensor wie weiter unten beschrieben mit einem induktiven Bauelement an den Eingängen 33 angeschlossen, so kann, wie in Fig. 4 verdeutlicht, zu einem Zeitpunkt t nach Erzeugung eines Drehzahlpulses 16, beurteilt werden, in welchem Verhältnis sich der Strom zum diesem Zeitpunkt über dem Widerstand 26 und dem induktiven Bauelement des Verschleißsensors aufteilt. Aufgrund der bei einer größeren Induktivität stärker abnehmenden Spannung Vₛₕᵤₙₜ im Kurvenbereich 50 kann mittels einer einfach zu haltenden logischen Schaltung ein zum Grad des Bremsbelagverschleisses weitgehend proportionaler Wert ausgegeben werden. Mittels des Analog-/Digital-Wandlers kann über die Zusatzsignale dieser Wert in einer festlegbaren Auflösung, z.B. in 2³ = 8 Stufen mit 3 Daten-Bits an das Steuergerät der Bremsenregelungseinrichtung übertragen werden.

Fig. 5 stellt schematisch einen in einen Bremssattel eingebauten Bremsbelagverschleißsensor mit einer veränderbaren Induktivität dar. Dabei wird in einer Spule 40, die fest mit einem Bremssattel verbunden ist, ein ferromagnetischer Spulenkern 39 bewegt. Je nach Position des Kerns ändert sich die Induktivität der Spule. Es ist ebenfalls möglich, die Anordnung von Spule und Kern umzukehren, d.h. die Spule wird bewegt und der ferromagnetische Kern ist fest mit dem Bremssattel 36, 36' verbunden. Die Position des Kerns folgt der Stellung der Bremssättel zueinander und ist damit proportional zur Summe der Dicken von Bremsbelag 37, Bremsbelag 37' und der Dicke der Bremsscheibe 38.

Gemäß der Erfindung ist eine berührungslose Wegmessung an einer geringer temperaturkritischen Stelle möglich, als bei bekannten Verfahren.

In Fig. 6 ist eine Schaltungsanordnung eines aktiven Sensors mit einer Einrichtung zur Erkennung von Unterspannungsbetrieb und Ausgabe eines entsprechenden Signals mittels des digitalen Zusatzprotokolls dargestellt.
Mit Hilfe der zusätzlichen Unterspannungserkennungseinrichtung 28, welche mit den Anschlüssen V_{cc} und V₋ verbunden ist, ist erkennbar, wenn sich in den Zuleitungen Übergangswiderstände, z.B. durch Korrosion im Stecker, gebildet haben. In diesem. Fall reduziert sich die Versorgungsspannung des Sensors durch die an den Übergangswiderständen abfallende Spannung. Sinkt die Sensorspannung unter einen Mindestwert, der für einen sicheren Sensorbetrieb erforderlich ist, kann dies aufgrund eines an die angeschlossenen Regeleinheit (ECU) weitergeleiteten Signals erkannt werden.
Bei Unterschreiten der Spannung unter einen vorgegebenen Schwellenwert wird von der Logik 30 ein Signal über das digitale Zusatzprotokoll an die Regeleinheit (ECU) gesendet. Die gemessene Spannung kann auch im A/D-Wandler 29 von der Kontrolleinheit 30 binär gewandelt und mit dem digitalen Protokoll des Sensors an eine Regeleinheit übertragen werden.

### Bezugszeichenliste

- 1: Schaltungsanordnung für aktiven Drehzahlsensor
- 2: Auswerteeinheit
- 3: Signalleitungen
- 4: Stromquelle
- 5: Stromquelle
- 6: Stromquelle
- 7: Drehzahlsensorelement
- 8: Signalaufbereitung
- 9: Oszillator
- 10: Schaltblock zur Stromversorgung und Erkennung der Stromlevel
- 11: Fehlererkennungseinrichtung
- 12: Abtasteinrichtung
- 13: Datenerfassungseinrichtung
- 14: Oszillator
- 15: ODER-Gatter
- 16: Drehzahlpulse
- 17, 17' ,17": Zusatzinformationspulse
- 18: Sensoreinheit
- 19: Bremsbelagverschleißsensor
- 20: Encoder
- 21: Stromquelle für Drehzahlsignal
- 22: Stromquelle für Zusatzsignale
- 23: Stromzweig für Strommeßeinrichtung
- 24: Stromquelle
- 25: Verstärker
- 26: Shunt
- 27: Auswerteschaltung
- 28: Einrichtung zur Spannungsmessung
- 29: Analog-/Digital-Wandler
- 30: Digitale Logikeinrichtung
- 31: Schaltung zur Spannungsstabilisierung
- 32: Signalgrundstrom
- 33: Signaleingang für Bremsverschleißsensor
- 34: Stromverzweigung
- 35: Stromzweig für Bremsbelagverschleißsensor
- 36,36': Bremssattel
- 37,37': Bremsbelag
- 38: Bremsscheibe
- 39: Spulenkern
- 40: Spule
- 41: Sensorleitungen für Bremsbelagverschleißsensor
- 42: Drehzahlpulsamplitude
- 43: Pulsabstand
- 44: steuerbare Stromquelle
- 45: Modulator
- 46: Drehzahlsensoreingänge
- 47: Zusatzinformationen
- 48: Zusatzinformationen
- 49: Drehzahlsignal
- 50: Kurvenbereich

## Patentansprüche

1. Anordnung (1) zur Erfassung und Übermittlung von Sensorsignalen an eine Auswerkeinheit (2), insbesondere Schaltungsanordnung für einen aktiven Drehzahlsensor (18) in Kraftfahrzeugen, mit zwei oder mehreren Sensoreingängen (33,46), einer Verarbeitungseinheit (25,29,30,45) und mindestens einer Stromquelle (21,22), wobei die Anordnung (1) so ausgebildet ist, dass in Abhängigkeit eines an einem ersten Sensoreingang der Verarbeitungseinheit zur geführten Sensorsignals von einem DrehzahlSensorelement (7) ein der Auswerteeinheit (2) zuführbarer Signalstrom (32) erzeugt wird, welcher aus einem Grundstrom (32) zur Versorgung der Anordnung (1) durch die Auswerkeinheit (2) und einer Folge von Strompulsen (16) mit annähend gleicher Amplitude (42) und durchzahlabhängigen Abstand (43) besteht **dadurch gekennzeichnet, daß** der Signalstrom mittels der Verarbeitungseinheit (25, 29, 30, 45) und/oder der Stromquelle (21, 22) zu jedem Zeitpunkt auf den vorgegebenen Sollwert geregelt wird und die Anordnung einen weiteren Signaleingang (33) für einen weiteren Sensor (19), sowie eine Einrichtung zur Übertragung des weiteren Sensorsignals über den Signalstrom (26,27,34) umfaßt, wobei der am mindestens einen weiteren Sensoreingang anschließbare weitere Sensor einen Teil des Signalstromes als Versorgungsstrom über den weiteren Sensoreingang erhält.

2. Anordnung nach Anspruch 1, **dadurch gekennzeichnet, daß** in der Verarbeitungseinheit und der Stromquelle Mittel (22) zur Übertragung von einem oder mehreren codierten, insbesondere digital codierten, Zusatzsignalen (17) vorgesehen sind, so daß nach Maßgabe von der Verarbeitungseinheit zuführbaren Zusatzinformationen (47,48) der Signalstrom (32) moduliert wird.

3. Anordnung nach Anspruch 1 oder 2, **dadurch gekennzeichnet, daß** der Versorgungsstrom für den weiteren Sensor (19) mittels eines Stromverzweigungsmittels (33,34,26) bereitgestellt wird.

4. Anordnung nach Anspruch 3, **dadurch gekennzeichnet, daß** das Stromverzweigungsmittel im Strompfad der Stromquelle (21,22) angeordnet ist.

5. Anordnung nach Anspruch 3 oder 4, **dadurch gekennzeichnet, daß** das Verzweigungsmittel in einem ersten Stromzweig (23) eine Strommeßeinrichtung (26,27) und in einem zweiten Stromzweig (35) einen Anschluß (33) für den weiteren Sensor aufweist.

6. Anordnung nach mindestens einem der Ansprüche 2 bis 5, **dadurch gekennzeichnet, daß** die durch den weiteren Sensor abgefühlte Meßgröße den durch den weiteren Sensor fließenden Strom moduliert und dieser Strom mittels einer auf der Anordnung vorgesehenen Auswerteschaltung (27,29,30) digital umgeformt und in Form eines codierten Zusatzsignals (17) über den Signalstrom an eine Auswerteeinheit übertragen wird.

7. Anordnung nach mindestens einem der Ansprüche 1 bis 6, **dadurch gekennzeichnet, daß** der am weiteren Sensor eingang angeschlossene weitere Sensor zur Erfassung der Position eines mechanisch verschiebbaren Elements (36,36',37,37') vorgesehen ist, und der weitere Sensor ein induktives Bauelement (39,40) umfaßt, dessen Induktivität sich nach Maßgabe der Position des verschiebbaren Elements ändert.

8. Sensor (19) in einer Anordnung nach einem der Ansprüche 1 bis 7 zur Erfassung der Position eines mechanisch verschiebbaren Elements (36, 36' ,37, 37'), insbesondere zur Erfassung des Bremsbelagverschleisses in einer Kraftfahrzeugbremse, mit einer Auswerteschaltung (1), **dadurch gekennzeichnet, daß** der Sensor zwei oder mehrere Signalleitungen (41) zur Übermittlung eines von der Position proportional abhängigen Signals an eine Schaltungsanordnung (1) aufweist und die Radsensoreinheit über die Signalleitungen (41) mit einem Versorgungsstrom gespeist wird.

9. Sensor nach Anspruch 8, **dadurch gekennzeichnet, daß** der Sensor ein induktives Bauelement (39,40) umfaßt, dessen Induktivität sich nach Maßgabe der Position des verschiebbaren Elements ändert.

10. Sensor nach Anspruch 9, **dadurch gekennzeichnet, daß** das verschiebbare.Element mechanisch mit dem Magnetkern (39) und/oder der Spule (40) in der Weise verbunden ist, daß sich eine Lageänderung des Kerns gegenüber der Spule ergibt.

11. Sensor nach Anspruch 8, **dadurch gekennzeichnet, daß** dieser ein Widerstandselement, welches einen in Abhängigkeit vom verschiebbaren Element veränderbaren Widerstand hat, oder ein Schaltelement, welches sich bei einer bestimmten vorgegebenen Position des verschiebbaren Elements öffnet oder schließt, oder ein kapazitives Bauelement mit einer von der Position abhängigen Kapazität oder eine Kombination von wegabhängig veränderbaren Widerständen, Kapazitäten, Induktivitäten und Schaltern umfaßt.

12. Verfahren zur Übermittlung von Sensorsignalen (16,32,17) an eine Auswerteeinheit (2) mittels eines Signalstroms über eine elektrische Zuleitung (3) von der Auswerteeinheit (2) zu einer zur Übermittlung der Sensorsignale vorgesehenen Anordnung (1), bei dem das Signal eines Drehzahlsensors (7) mittels einer Auswerteschaltung (25,29,30,45) und einer Stromquelle (21) in eine Folge von Strompulsen (16) mit annähernd gleicher Amplitude (42) und drehzahlabhängigem Pulsabstand (43) umgesetzt wird, wobei die Anordnung durch einen Grundstrom (32) auf der Stromleitung von der Auswerteeinheit elektrisch versorgt wird, **dadurch gekennzeichnet, daß** ein Teil des Signalstromes (16,17,32) in einen Meßstrom an einem Meßwiderstand (26) und in einen Strom zur elektrischen Versorgung eines oder mehrerer zusätzlicher Sensoren (19) aufgeteilt wird.

13. Verfahren nach Anspruch 12, **dadurch gekennzeichnet, daß** eine elektrische Versorgung des oder der zusätzlichen Sensoren nur während eines Strompulses (16) erfolgt.

14. Anordnung (1) zur Erfassung und Übermittlung von Sensorsignalen, worin ein Drehzahlsensorsignal eines Kraftfahrzeugrades in ein durch zwei Signalleitungen übertragbares Signal umgeformt wird und die Versorgungsspannung der Anordnung über die Signalleitungen (3) erhalten wird, gemäß einem der Ansprüche 1 bis 6, **dadurch gekennzeichnet, daß** mittels einer auf der Anordnung angeordneten Spannungsmeßeinrichtung (28) die an den Signalleitungen anliegende Versorgungsspannung gemessen wird.

15. Anordnung nach Anspruch 14, **dadurch gekennzeichnet, daß** ein Analog/Digital-Wandler (29) vorgesehen ist, der den Wert der Versorgungsspannung in ein Zusatzsignal umwandelt oder ein Schaltelement, welches ein "high"-Statussignal oder ein "low"-Statussignal für eine in einem festgelegten Spannungsbereich liegende Versorgungsspannung als Zusatzsignal (17) erzeugt, und Mittel vorgesehen sind, mit denen das Zusatzsignal in den Pulspausen des Drehzahlsignals (16) über die Signalleitungen übertragen werden kann.

## Claims

1. Arrangement (1) for detecting and transmitting sensor signals to an evaluation unit (2), especially a circuit arrangement for an active rotational speed sensor (18) in motor vehicles, with two or more sensor inputs (33, 46), a processing unit (25, 29, 30, 45), and at least one current source (21, 22), wherein the arrangement (1) is so designed that, depending on a sensor signal supplied at a first sensor input of the processing unit, a rotational sensor element (7) produces a signal current (32) that can be supplied to the evaluation unit (2) and is composed of a basic current (32) for the supply of the arrangement (1) by way of the evaluation unit (2) and a sequence of current pulses (16) having an approximately equal amplitude (42) and a distance (43) responsive to the rotational speed,
**characterized in that** the signal current is regulated at any time to the predetermined nominal value by means of the processing unit (25, 29, 30, 45) and/or the current source (21, 22), and the arrangement comprises another signal input (33) for a second sensor (19) as well as a device for transmitting the other sensor signal by way of the signal current (26, 27, 34), with the second sensor that can be connected to the at least one other sensor input being furnished with part of the signal current as a supply current by way of the other sensor input.

2. Arrangement as claimed in claim 1,
**characterized in that** a means (22) for transmitting one or more coded, in particular digitally coded, additional signals (17) is provided in the processing unit and the current source so that the signal current (32) is modulated according to additional information (47, 48) that can be sent to the processing unit.

3. Arrangement as claimed in claim 1 or 2,
**characterized in that** the supply current for the second sensor (19) is provided by means of a current branching means (33, 34, 26).

4. Arrangement as claimed in claim 3,
**characterized in that** the current branching means is arranged in the current path of the current source (21, 22).

5. Arrangement as claimed in claim 3 or 4,
**characterized in that** the branching means includes a current measuring device (26, 27) in a first current branch (23) as well as a connection (33) for the second sensor in a second current branch (35).

6. Arrangement as claimed in at least one of claims 2 to 5,
**characterized in that** the measured quantity sensed by the second sensor modulates the current that flows through the second sensor, and this current is digitally converted by means of an evaluation circuit (27, 29, 30) provided on the arrangement, and is transmitted in the form of a coded additional signal (17) by way of the signal current to an evaluation unit.

7. Arrangement as claimed in at least one of claims 1 to 6,
**characterized in that** the second sensor connected to the other sensor input is provided for sensing the position of a mechanically slidable element (36, 36', 37, 37'), with the said second sensor comprising an inductive component (39, 40) whose inductance varies according to the position of the slidable element.

8. Sensor (19) in an arrangement as claimed in any one of claims 1 to 7 for detecting the position of a mechanically slidable element (36, 36', 37, 37'), especially for detecting the brake lining wear in a motor vehicle brake, including an evaluation circuit (1),
**characterized in that** the sensor includes two or more signal lines (41) for transmitting a signal that is proportionally responsive to the position to a circuit arrangement (1), and the wheel sensor unit is fed with a supply current by way of the signal lines (41).

9. Sensor as claimed in claim 8,
**characterized in that** the sensor comprises an inductive component (39, 40) whose inductance varies according to the position of the slidable element.

10. Sensor as claimed in claim 9,
**characterized in that** the slidable element is connected mechanically to the magnetic core (39) and/or the coil (40) in such a fashion that a change in position of the core relative to the coil occurs.

11. Sensor as claimed in claim 8,
**characterized in that** the sensor comprises a resistor element having a resistance that is variable in dependence on the slidable element, or a switch element that opens or closes at a defined predetermined position of the slidable element, or a capacitive component having a position-responsive capacitance, or a combination of travel-responsively variable resistors, capacitances, inductances and switches.

12. Method of transmitting sensor signals (16, 32, 17) to an evaluation unit (2) by means of a signal current by way of an electric supply line (3) from the evaluation unit (2) to an arrangement (1) provided for transmitting the sensor signals, wherein the signal of a rotational speed sensor (7) is converted by means of an evaluation circuit (25, 29, 30, 45) and a current source (21) into a sequence of current pulses (16) having approximately the same amplitude (42) and a speed-responsive pulse distance (43), the said arrangement being fed electrically by the evaluation unit with a basic current (32) on the current conduit,
**characterized in that** part of the signal current (16, 17, 32) is divided into a measuring current at a measuring resistor (26) and a current for the electrical supply of one or more additional sensors (19).

13. Method as claimed in claim 12,
**characterized in that** the additional sensor(s) is/are fed electrically only during a current pulse (16).

14. Arrangement (1) for detecting and transmitting sensor signals, wherein a rotational speed sensor signal of a motor vehicle wheel is converted into a signal that can be transmitted by two signal lines and the supply voltage of the arrangement is received by way of the signal lines (3), as claimed in any one of claims 1 to 6,
**characterized in that** the supply voltage applied to the signal lines is measured by means of a voltage-measuring device (28) mounted on the arrangement.

15. Arrangement as claimed in claim 14,
**characterized in that** an analog/digital converter (29) is provided converting the value of the supply voltage into an additional signal, or a switch element which produces a 'high' status signal or a 'low' status signal as an additional signal (17) for a supply voltage lying in a defined voltage range, with means being provided permitting the transmission of the additional signal in the pulse pauses of the rotational speed signal (16) by way of the signal lines.

## Revendications

1. Dispositif (1) pour déterminer et transmettre des signaux de capteur à un système-évaluation (2), en particulier à un système de circuit pour un capteur de vitesse (18) d'automobile actif, comportant deux ou plusieurs d'entrées de capteur (33, 46), un transformateur (25, 29, 30, 45) et au moins une source de courant (21, 22), le dispositif (1) étant formé de sorte qu'en dépendance à un signal de capteur d'un élément de capteur de vitesse (7) amené à une entrée de capteur première du transformateur un courant de signal (32) est produit, amenable au système-évaluation (2) et composé d'un courant de fond (32) pour alimenter le système (1) par l'intermédiaire du système d'évaluation (2), et d'une suite d'impulsion de courant (16) d'une amplitude (42) à peu près identique et d'un écart (43) dépendant à la vitesse, **caractérisé en ce que** le courant de signal par l'intermédiaire du transformateur (25, 29, 30, 45) et/ou de la source de courant (21, 22) en tout temps est commandé à la valeur prescrite, et que le dispositif comporte une autre entrée de signal (33) pour un autre capteur (19) et un mécanisme pour transmettre l'autre signal de capteur à travers du courant de signal (26, 27, 34), l'autre capteur attachable à au moins une autre entrée de capteur recevant une partie du courant de signal comme courant d'alimentation à travers de l'autre entrée de capteur.

2. Dispositif conforme à la revendication 1, **caractérisé en ce que** des moyens (22) pour transmettre une ou plusieurs de signaux additionnels (17) codés, particulièrement codés de manière digitale, sont prévus dans le transformateur et dans la source de courant de sorte que dans la mesure des données additionnelles (47, 48) amenable au transformateur, le courant de signal (32) soit modulé.

3. Dispositif conforme aux revendications 1 ou 2, **caractérisé en ce que** le courant d'alimentation pour l'autre capteur (19) est rendu disponible par l'intermédiaire d'un moyen de dérivation du courant.

4. Dispositif conforme à la revendication 3, **caractérisé en ce que** le moyen de dérivation est disposé dans la trace-courant de la source de courant (21, 22).

5. Dispositif conforme aux revendications 3 ou 4, **caractérisé en ce que** le moyen de dérivation dans une branche-courant première (23) comporte un instrument mesureur de courant (26, 27), et dans une branche-courant secondaire (35) comporte un raccord (33) pour l'autre capteur.

6. Dispositif selon au moins l'une des revendications 2 à 5, **caractérisé en ce qu** la grandeur mesurée sondée par l'autre capteur va moduler le courant coulant à travers de l'autre capteur et que ce courant sera transformé de manière digitale par l'intermédiaire d'un circuit d'évaluation (27, 29, 30) prévu sur le dispositif et sous forme d'un signal additionnel (17) codé sera transmis à travers d'un courant de signal à un système d'évaluation.

7. Dispositif selon au moins l'une des revendications 1 à 6, **caractérisé en ce que** l'autre capteur raccordé à l'autre entrée de capteur est prévu pour déterminer la position d'un élément (36, 36', 37, 37') décalable de manière mécanique, et que l'autre capteur comporte une composante (39, 40) inductive, l'induction de laquelle change selon la position de l'élément décalable.

8. Capteur (19) dans un dispositif conforme à l'une des revendications 1 à 7 pour déterminer la position d'un élément (36, 36', 37, 37') décalable de manière mécanique, en particulier pour déterminer l'usure de la garniture de frein dans un frein d'automobile, comportant un circuit d'évaluation (1), **caractérisé en ce que** le capteur comporte deux ou plusieurs de conduites de signal (41) pour transmettre un signal proportionnellement dépendant à la position à un système de circuit (1) et que du courant d'alimentation est amené à travers des conduites de signal (41) au capteur de roue.

9. Capteur conforme à la revendication 8, **caractérisé en ce que** le capteur comporte une composante (39, 40) inductive, l'induction de laquelle se change selon la position de l'élément décalable.

10. Capteur selon la revendication 9, **caractérisé en ce que** l'élément décalable, est mécaniquement relié avec le noyau aux magnétiques (39) et/ou avec la bobine (40) de sorte que la position du noyau change vis-à-vis la bobine.

11. Capteur selon la revendication 8, **caractérisé en ce qu'**il comporte un élément de résistance d'une résistance variable en dépendance de l'élément décalable, ou à la position, ou une combinaison de résistances, capacités, inductions et circuits variables en dépendance de la trace.

12. Procédé pour transmettre des signaux de capteur (16, 32, 17) à un dispositif d'évaluation (2) par l'intermédiaire d'un courant de signal à travers d'une conduite d'amenée (3) électrique hors du dispositif d'évaluation (2) à un mécanisme (1) prévu pour la transmission des signaux de capteur dans lequel le signal d'un capteur de vitesse (7) par l'intermédiaire d'un circuit d'évaluation (25, 29, 30, 45) et d'une source de courant (21) est transformé dans une suite d'impulsions de courant (16) d'une amplitude (42 à peu près identique et un écart d'impulsion (43) dépendant à la vitesse, le dispositif étant alimenté électriquement par un courant de fond (32) dans la conduite de courant du dispositif d'évaluation, **caractérisé en ce qu'**une partie du courant-signal (16, 17, 32) est divisée dans un courant mesureur appliqué à un résistance de mesure (26), et un courant pour l'alimentation électrique d'un ou plusieurs de capteurs (19) additionnels.

13. Procédé conforme à la revendication 12, **caractérisé en ce qu'**une alimentation électrique du ou des capteur(s) additionnel(s) est effectuée seulement pendant une impulsion de courant (16).

14. Dispositif (1) pour déterminer et transmettre des signaux de capteur dans lequel un signal du capteur de vitesse d'une roue d'automobile est transformé dans un signal transmis par deux conduites de signal et que la tension d'alimentation du dispositif est effectué par l'intermédiaire des conduites de signal (3), conforme à l'une des revendications 1 à 6, **caractérisé en ce que** la tension d'alimentation appliquée aux conduites de signal est mesurée par un instrument à mesurer la tension (28) disposé sur le dispositif

15. Dispositif selon la revendication 14, **caractérisé en ce qu'**un transformateur (29) analogique/digital est prévu transformant la valeur de la tension d'alimentation dans un signal additionnel ou un élément de circuit, produisant comme signal additionnel (17), un signal d'état « haut » ou un signal d'état « bas » pour une tension d'alimentation se trouvant dans l'intervalle de tension et que des moyens sont prévus par l'intermédiaire desquels le signal additionnel peut être transmis dans les intervalles d'impulsion du signal de vitesse (16) à travers des conduites de signal.
